# EUROPEAN PATENT APPLICATION

(11) **EP 0 736 369 A1**
(43) Date of publication of application: **09.10.1996**
(21) Application number: 93906814.4
(22) Date of filing: 24.03.1993
(51) Int. Cl.: B29D 31/00, B41F 13/08

(54) **METALLIZED FIBER-REINFORCED RESIN ROLL AND PRODUCTION THEREOF**

(30) Priority: 16.04.1992 JP 96425/92; 16.04.1992 JP 96426/92; 30.10.1992 JP 292634/92
(71) Applicant: SUMITOMO CHEMICAL COMPANY LIMITED, Osaka-shi, Osaka 541 (JP)
(72) Inventor: NAKAMURA, Hiroshi, Tsuchiura-shi, Ibaraki 300 (JP); MUROTANI, Hitoshi, Tsukuba-shi, Ibaraki 305 (JP); SHINOHARA, Yasuo, Niihari-gun, Ibaraki 300 (JP); YAMATSUTA, Kohji, Yuki-gun, Ibaraki 300 (JP); MATSUOKA, Yoshiki, Tsukuba-shi, Ibaraki 305 (JP)
(74) Representative: Henkel, Feiler, Hänzel & Partner
(86) International application number: JP9300350
(87) International publication number: WO9321006

(57) **Abstract**

A metallized fiber-reinforced resin roll produced either by forming only an electroless plating layer on the surface of a crude fiber-reinforced resin roll or by forming a resin layer for electroless plating on an inner layer of the surface of a crude fiber-reinforced resin roll and an electroless plating layer on an outer layer thereof, and a process for producing the roll comprising the steps of: (1) forming a resin layer for electroless plating on the surface of a crude fiber-reinforced resin roll; (2) finishing the surface of the resin layer, and; (3) conducting electroless plating.

## Description

### [TECHNICAL FIELD]

The present invention relates to a roll made of a fiber-reinforced resin (hereinafter referred to as FRP in some cases) of which surface is coated with a metal.

### [BACKGROUND ART]

FRP has a higher specific strength and specific stiffness than metal materials. By taking advantages of such characteristics of FRP, FRP has come to be used frequently in industrial fields and has begun to be used in rolls. Rolls made of FRP, however, have the following defects: they tend to be injured by an object to be brought into contact therewith since they are inferior in hardness to metals; they have a short service life because of their low abrasion resistance; and since they are poor conductors, static electricity is generated depending on the material of an object to be conveyed by them. Therefore, rolls made of FRP of which surface is coated with a metal have become useful. Examples of such FRP-made rolls are those proposed in JP-A-61-194197 and JP-A-2-296008.

For producing these conventional FRP-made rolls, there are employed, for example, a process of coating the surface of an FRP-made pipe stock for roll with a resin having electroconductivity imparted by blending of electrically conductive metal powder such as silver, and then carrying out electroplating; and a process of covering an FRP-made pipe stock for roll with a metal tube, followed by electroplating.

The production processes of imparting an electroconductivity to the surface of an FRP-made pipe stock for roll and carrying out electroplating are disadvantageous in that electroplating inherently gives a plating film of nonuniform thickness. Accordingly, the roll precision (e.g. the roundness and straightness of a roll) has usually been increased by forming an electroplating layer with a fairly large thickness at first, grinding and polishing the plating layer, and optionally, coating the surface with hard chrome plating. In this case, the thickness of the electroplating reaches 500 µm or more.

That is, the conventional processes require the following steps:
1. cutting and grinding the surface of an FRP-made pipe stock for roll,
2. imparting an electroconductivity to the surface of the FRP-made pipe stock for roll,
3. forming a thick electroplating layer as a substrate,
4. cutting, grinding and polishing the electroplating layer in order to increase the roll precision,
5. coating the surface with a desired metal such as hard chrome plating, and
6. polishing the surface.

As can be seen from the above-mentioned steps, the conventional processes require not only the time-consuming steps but also a margin to cut, grind and polish, so that a thick electroplating layer is formed in these processes. Consequently, the processes involve a serious problem in that they require a long production time and entail a high production cost. Furthermore, they are disadvantageous also in that the weight-reducing effect, the greatest merit of the employment of FRP, is impaired by the thick electroplating.

The present invention has been done to remove such defects. It provides a plated roll made of FRP which is light in weight and easy to produce, and has surface characteristics equal to the conventional metal-plated rolls made of FRP.

The conventional FRP-made rolls cannot be applied to the uses in which lightweight properties, surface sliding properties, surface oilphobic property and hydrophobic property are required since they are not satisfactory enough in these properties. Especially in conveying rolls of rotary presses (more particularly, newspaper-conveying rolls of rotary presses for newspaper), it has been desired to reduce the weight of the rolls and solve the problem of undesirable transfer of printed ink from the going papers to the coming papers via the conveying rolls.

As a means for solving these problems, there has been proposed a method of coating the surface of the roll with a fluororesin to reduce the surface energy. The rolls obtained by this method are satisfactory in oilphobic property and hydrophobic property. However, they disadvantageously generate static electricity for the lack of electroconductivity, and tend to be injured for the insufficient hardness of the fluororesin.

JP-A-63-92564 discloses a method for producing a roll made of FRP, in which a plating layer is tucked in to cover a metal-fitting portion in order to improve the resistance to peeling of the plating layer which starts from the end of the plating.

In addition, JP-A-3-163166 discloses a method for plating on FRP which comprises conducting electroless plating and electroplating in this order on the surface of a fiber-reinforced resin molded product impregnated with a thermosetting resin composition for plating.

### [DISCLOSURE OF THE INVENTION]

The present inventors found that the above-mentioned various problems can be solved when a metal-coated FRP-made roll is produced either by coating the surface of an FRP-made pipe stock for roll with electroless plating alone or by coating the surface of an FRP-made pipe stock for roll with a resin for electroless plating and then coating the surface of the resin-coated pipe stock with electroless plating alone. The present invention has been accomplished based on the finding.

In the present invention, an FRP-made roll of which surface has been coated with a metal plating is obtained by increasing the roll precision (e.g. roundness and straightness) of an FRP-made pipe stock for roll, conducting electroless plating on the thus treated pipe stock to a desired thickness, and optionally polishing the surface of the electroless plated-surface of the pipe stock to attain a desired surface precision.

In detail, an FRP-made pipe stock for roll obtained by molding is processed with a lathe or a grinder by a conventional method to increase the precision of the pipe stock for roll with regard to its roundness and straightness. When a high precision is required with regard to the surface roughness for a desired plated roll, it is preferable to reduce the surface roughness of the pipe stock for roll before carrying out electroless plating. In this case, there can be employed, for example, a method of finishing the surface of the pipe stock for roll with a grinder or a polishing machine after cutting of the surface with a lathe or a grinder, and a method of applying a resin on the surface which has been turned.

Then, electroless plating on the pipe stock for roll is carried out. The thickness of an electroless plating layer preferably falls within the range of from 5 to 100 µm. A plating layer with a thickness of less than 5 µm accompanies such problems that exhibition of surface characteristics such as surface hardness is disturbed by the influence of the material of the pipe stock, and the final polishing is difficult. A plating layer with a thickness of more than 100 µm causes not only a weight increase but also formation of cracks due to the internal stress of plating. It also accompanies the problems of long production time and high production cost.

The roll produced by the above procedure of which surface has been coated with the electroless plating alone can be finished by a final finishing step if necessary. The surface finishing can be conducted, for example, with a super finishing machine, or by buffing or electroless polishing.

For improving the roll precision and the adhesion between the electroless plating layer and the FRP-made pipe stock for roll, it is a useful and preferable method to form a resin layer for electroless plating on the surface of the FRP-made pipe stock for roll and carry out electroless plating on the resin layer for electroless plating.

That is, in this method, the formation of the resin layer for electroless plating facilitates electroless plating operation and permits strong adhesion of the electroless plating layer to the FRP-made pipe stock for roll. It is also possible to adjust the precision of an FRP-made roll by grinding and/or polishing the resin layer for electroless plating.

An FRP-made roll with a plating layer having a resin layer for electroless plating and formed by electroless plating alone is produced by carrying out the following steps in that order. Needless to say, one or more additional steps may be carried out before or after these steps or between two of them.
(1) coating the surface of an FRP-made pipe stock for roll with a resin layer for electroless plating,
(2) finishing the surface of the resin layer for electroless plating,
(3) carrying out electroless plating, and
(4) finishing the surface of an electroless plating layer if necessary.

These steps are advantageous in productivity, economical benefit, and weight reduction of the resulting FRP-made roll, as compared with the conventional steps for plating an FRP-made roll which require electroplating imperatively.

The FRP-made pipe stock for roll used in the present invention is explained below.

Reinforcing fiber used for producing the FRP-made pipe stock for roll is not particularly limited and heretofore known various fibers can be used. Examples of these fibers are inorganic fibers such as glass fiber, carbon fiber, graphite fiber, silicon carbide fiber, alumina fiber and titania fiber; and organic fibers such as aromatic polyamide fiber, polyamide fiber, polyester fiber, polyimide fiber and polyethylene fiber. There may be used either a fiber selected from these fibers or a combination of two or more of fibers selected from them. As to the form of the fiber used, any of continuous fiber, single fiber and a combination of them may be used. If necessary, the fibers may be used after being processed into a textile, a mat or the like. Besides the above-exemplified reinforcing fibers, there may be added various fillers, for example, inorganic granules of talc, mica, silica, etc. iron powder, and powders of metals such as aluminum.

A matrix resin used for producing the FRP-made pipe stock for roll is not particularly limited and heretofore known various resins can be used. There can be exemplified thermosetting resins such as epoxy resins, polyimide resins, unsaturated polyester resins, vinyl ester resins, urethane resins, phenolic resins, alkyd resins, xylene resins and melamine resins; and thermoplastic resins such as polyethylenes, polypropylenes, polyvinyl chlorides, polystyrenes, ABS resins, fluororesins, polycarbonates, polyethylene terephathalates, polybutylene terephathalates, polysulfones, polyether sulfones, polyether ether ketones, polyphenylene oxides, polyamides (e.g. nylon 6 and nylon 66) and polyphenylne sulfides. Of these, the epoxy resins and the vinyl ester resins are preferable from the viewpoint of the production and performance characteristics of the pipe stock for roll.

A method for molding the FRP-made pipe stock for roll is not particularly limited. For example, when a thermosetting resin is used, the pipe stock can be molded by the so-called hand lay-up method comprising wrapping sheet-like prepregs impregnated with uncured resin around a mandrel and then heating and pressing them; a pultrusion method; or a filament winding method.

Next, the resin for electroless plating with which the surface of the FRP-made pipe stock for roll is coated is explained below. The resin for electroless plating used in the present invention may be a thermoplastic resin on which electroless plating has often been carried out, for example, an ABS resin. However, for attaining a good adhesion to the FRP-made pipe stock for roll, the resin for electroless plating preferably comprises as its main constituent a resin which is the same as or highly compatible with the matrix resin used for molding the pipe stock for roll. From the viewpoint of ease of molding and performance characteristics of the FRP-made pipe stock for roll, it is preferable to use an epoxy resin as the matrix resin. In this case, the resin for electroless plating preferably comprises the epoxy resin as its main constituent.

For increasing the adhesive strength of an electroless plating layer to the FRP-made pipe stock for roll, it is preferable to etch the surface of the pipe stock with an acid or an alkali before electroless plating. It is a useful technique to incorporate inorganic powders or granules into the resin for electroless plating in order to obtain a satisfactory anchor shape by the etching. The inorganic powder or granules preferably used for this purpose include magnesium carbonate and dolomite.

A method for coating the FRP-made pipe stock for roll with the resin for electroless plating is not particularly limited. There can be exemplified a method of applying the resin and the method described herein-after. Instead of coating the FRP-made pipe stock for roll with the resin for electroless plating, the above-mentioned resin for electroless plating may be used as a matrix resin of at least the outermost layer of the FRP-made pipe stock for roll in molding the pipe stock.

Before electroless plating, the roll precision including roundness and straightness is increased by cutting or grinding either the surface of the FRP-made pipe stock for roll or the surface of the FRP-made pipe stock for roll which has a resin layer for electroless plating formed thereon.

When the resin layer for electroless plating is formed, it is preferable to afford thereto a margin to cut or a margin to grind. The thickness of the margin to cut or the margin to grind is preferably 300 to 1500 µm in view of workability. A resin layer for electroless plating having an appropriate thickness can be obtained by impregnating a fibrous material such as glass fiber nonwoven fabric with the resin and using the resin-impregnated fibrous material for the formation of a resin layer for electroless plating. The FRP-made pipe stock for roll of which surface has been coated with the resin for electroless plating is increased in roll precision (roundness and straightness) with, for example, a lathe and/or a grinder. This step is not special at all, and operations thereof are performed by a conventional method.

The resin layer for electroless plating in the present invention can be subjected to precision processing such as fluting or satinizing. This method is applicable to the production of a fluted roll or a textured roll.

When the surface roughness of a roll as final product is required to have a high precision, it is preferable to reduce the surface roughness of the pipe stock for roll beforehand. In this case, the surface of the pipe stock for roll which has been cut with a lathe can be further finished with a grinder or a polishing machine, or the turned surface of the pipe stock for roll can be coated with a resin to be further smoothed.

Next, the electroless plating for coating the roll surface is explained below. The kind of the electroless plating is not particularly limited, and heretofore known electroless platings may be employed.

As the electroless plating, there can be exemplified pure metal platings such as nickel, copper, cobalt and tin platings; alloy platings of nickel-cobalt, nickel-phosphorus, nickel-boron, cobalt-iron-phosphorus, etc.; and the so-called composite electroless platings formed by making particles of resin such as fluororesin particles or particles of ceramic such as silicon nitride into eutectoid together with an electroless metal plating. These platings may be used alone or if necessary in combination of two or more thereof.

Particularly, alloy plating of nickel-boron, nickel-phosphorus or the like is preferable as a substitute for a roll which has heretofore been subjected to hard chrome plating from the viewpoint of hardness and corrosion resistance.

The thickness of an electroless plating layer may be properly chosen depending on the purpose of use. Although not always limited, the thickness falls within the approximate range of from 5 to 100 µm, preferably from 5 to 50 µm. A plating layer with a thickness of less than 5 µm accompanies such problems that exhibition of surface characteristics such as surface hardness is disturbed by the influence of the resin for electroless plating, and the final polishing is difficult. A plating layer with a thickness of more than 100 µm causes formation of cracks due to the internal stress of plating. It also accompanies the problems of long production time and a high production cost.

Further improvement of the sliding properties, oilphobic properties and hydrophobic properties of the rolls is necessary by the electroless plating layer when the rolls are applied to the uses in which these properties are required. For example, it has been required to reduce the weight of conveying rolls of rotary presses, specifically newspaper-conveying rolls of rotary presses for newspaper. Also, the conventional conveying rolls involve the problem of undesirable transfer of printed ink from the going papers to the coming papers via the conveying rolls. In order to improve the performances of the rolls, it is preferable to use a composite electroless plating formed by making fluororesin particles into eutectoid together with a metal plating such as nickel plating.

A composite electroless plating containing fluororesin fine particles which is used in the present invention is explained below. As the fluororesin referred to herein, there can be exemplified polytetrafluoroethylenes, tetrafluoroethylene-perfluoroalkyl vinyl ether copolymers, tetrafluoroethylene-hexafluoropropylene copolymers, tetrafluoroethylene-ethylene copolymers, polyvinylene fluorides, and polychlorotrifluoroethylenes. The fine particles referred to herein are granules having a number average particle size of approximately 100 µm or less, preferably 10 µm or less. In addition, from the viewpoint of the ease of abrasive finishing and uniformity of the surface, granules having a number average particle size of 1 µm or less are more preferable.

From the viewpoint of the performance characteristics of a plating film and ease of plating operation, it is particularly preferable that said composite electroless plating comprises, as its essential constituents, nickel or an alloy thereof and polytetrafluoroethylene fine particles.

The thickness of the composite electroless plating layer may be properly chosen depending on the purpose of use. Although not always limited, the thickness preferably falls within the range of from 5 to 50 µm for exhibition of the performance characteristics intended by the present invention.

The content of the fluororesin fine particles in the composite electroless plating preferably falls within the range of from 10 to 30% by volume in view of surface-energy-reducing ability and surface hardness or electroconductivity. When the content by volume of the fluororesin fine particles is less than 10%, the intended objects cannot be achieved for the lack of surface-energy-reducing ability. When the content by volume of the fluororesin fine particles exceeds 30%, there is undesirably caused a problem of insufficient hardness and electroconductivity of the surface.

The FRP-made roll, which has been produced by the above process and the surface of which has been coated with an electroless plating layer alone as a plating layer, is finished by a final polishing step as occasion demands. The surface finishing can be carried out by super finishing, buffing, electropolishing, etc.

The most important characteristic of the FRP-made roll of the present invention is its light weight. In some uses, a further weight reduction may be required, and the requirement can be met by replacing the conventional header portions and journal portions made of steel or aluminum at each end of the roll by FRP-made ones.

### [BRIEF DESCRIPTION OF THE DRAWINGS]

Fig. 1 is a partially sectional view of an FRP-made roll of the present invention comprising an FRP-made pipe stock for roll and FRP-made header portions wherein the whole surface of the roll including the header portions has been coated with a metal electroless plating.

Fig. 2 is a partially sectional view of an FRP-made roll having an electroless plating layer tucked in to cover the inner surface of the cylindrical portion.

Here, the symbols denote the following:
1. FRP-made pipe stock for roll,
2. header,
3. journal,
4. electroless plating coating layer.

The present invention is concretely explained below with reference to the drawings.

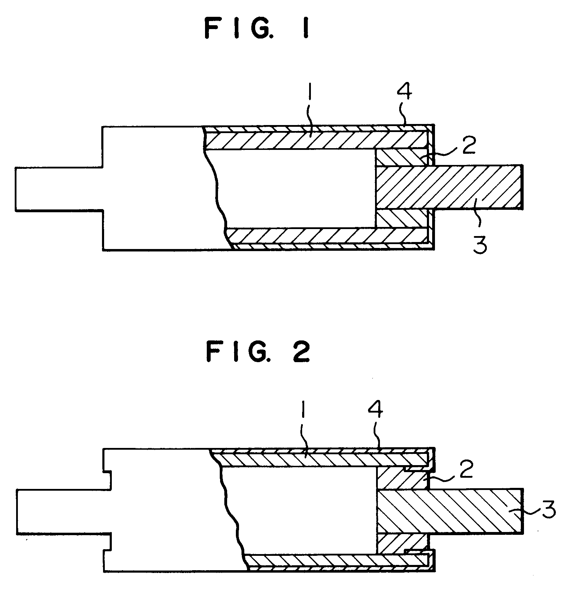

As described above, Fig. 1 is a partially sectional view of a roll having header portions also made of FRP, which is one example of FRP-made roll of the present invention. The portion of FRP-made pipe for roll (the pipe portion) and the FRP-made header portions of the FRP-made roll shown in Fig. 1 are coated with an electroless plating through a resin layer for electroless plating. The symbols in the figure are as described above, that is, 1 shows an FRP-made pipe stock for roll (a pipe), 2 an FRP-made header, and 3 a metal journal. 4 shows an electroless plating coating layer.

The FRP-made header 2 can be made of a combination of the same reinforcing fiber and matrix resin as used for producing the FRP-made pipe stock for roll; however, the employment of the same fiber and resin is not always necessary. For producing the header, various conventional techniques can be used. The header can be produced, for example, by the above-mentioned filament winding method or a method of laminating sheet-like prepregs on a mandrel and heating and pressing them to shape them.

In the FRP-made roll of the present invention, the pipe stock for roll 1 and the header 2 are joined to each other, for example, by adhesion with a heretofore well-known resin adhesive. Simultaneous use of mechanical joining such as pinning and adhesive joining is also possible. In addition, integral molding by the above-mentioned filament winding method or the like is also possible.

When the FRP-made roll obtained by attaching the FRP-made headers 2 to the FRP-made pipe stock for roll 1 and the FRP-made pipe stock for roll 1 are subjected to electroless plating, the pipe stock for roll and the headers can be directly subjected to electroless plating. The work-efficiency in the roll production and performance characteristics can be improved by forming a resin layer for electroless plating on the surfaces of the pipe stock for roll and the headers before electroless plating.

It is effective to prevent the peeling of a plating film at the ends of the roll, the generation of static electricity and the electrolytic corrosion that as shown in Fig. 1, the electroless plating coating layer reaches not only the surface of cylindrical portion of the roll but also the header portions. As a modification of the FRP-made roll shown in Fig. 1, there is an FRP-made roll in which journal portions are also made of FRP.

Fig. 2 is a partially sectional view of an FRP-made roll of the present invention in which the header portions and/or journal portions is made of FRP or a metal and which is obtained by coating with an electroless plating formed so that the electroless plating coating layer may be tucked in to cover the inside of the FRP-made pipe stock for roll at each end. This FRP-made roll is easy to produce and maintain because the plating layer is highly resistant to peeling from the FRP-made pipe stock for roll and is excellent in durability.

### [BEST MODE FOR CARRYING OUT THE INVENTION]

The present invention is illustrated below in further detail with examples. The present invention is not limited by the examples. Various applications and modifications of the examples can be made without departing from the gist of the present invention.

### Example 1

### 1. Molding of an FRP-made pipe stock for roll

A stainless-steel mandrel with an outside diameter of 70 mm and a length of 1500 mm was attached to a filament winding machine. A mold release agent was applied on the mandrel. Thereafter, a carbon fiber bundle was impregnated with a liquid epoxy resin composition and wound around the mandrel. The angle of winding of the fiber was adjusted to ±16° and the thickness of the wound fiber 3.0 mm. The amount of the resin picked up by the carbon fiber was adjusted so that the percentage by volume of the fiber is 60 ± 2% relative to the total volume of the fiber and the resin.

Here, for producing a pipe stock for roll made of carbon-fiber-reinforced resin (hereinafter referred to as CFRP in some cases), Magnamite AS4 (a trade name mfd. by Sumika Hercules, modulus of elasticity: 24 ton/mm², strength; 390 kg/mm²) was used as a carbon fiber. As a matrix epoxy resin composition, there was used a composition obtained by blending together stoichiometric amounts of Sumiepoxy ELA128 (diglycidyl ether of bisphenol A, a trade name, mfd. by Sumitomo Chemical Co., Ltd.) as an epoxy resin and Tonox 60-40 (a eutectic mixture of methaphenylenediamine and diaminodiphenyl ether, a trade name, mfd. by Uniroyal Inc.) as a curing agent.

The mandrel around which had been wound the carbon fiber moistened with the resin was placed in a heat curing oven and cured at 150°C for 2 hours. After the curing, the mandrel was removed from the carbon fiber, and its insoluble portions at the ends were cut off to obtain a CFRP-made pipe stock for roll.

### 2. Surface cutting and surface treatment of the CFRP-made-pipe stock for roll.

Next, the surface of the CFRP-made pipe stock for roll was cut with a lathe. The surface roughness of the pipe stock for roll was 15 S.

Then, the surface of the pipe stock for roll finished with the lathe was coated with a room temperature-curing vinyl ester resin (Ripoxy H600, a trade name, mfd. by Showa Kobunshi Co., Ltd.) by spraying to be smoothed. The surface roughness of the pipe stock for roll was 5.0 S.

### 3. Electroless plating

Subsequently, after a usual pretreatment, electroless plating was carried out to a thickness of about 40 µm by a conventional method by using Top chemialloy B-l (a trade name of an electroless plating solution for electroless nickel-boron alloy plating, mfd. by Okuno Seiyaku Kogyo, Co., Ltd.).

### 4. Finishing of the roll surface

The roll surface coated with electroless nickel-boron alloy plating was finished with a super-finishing machine to adjust the surface roughness to 0.5 S, whereby an FRP-made roll coated with electroless nickel-boron alloy plating was obtained. The surface hardness Hv of this roll was 800.

This FRP roll coated with electroless plating was manufactured without a step of forming a thick electroless plating layer, which step is essential for a conventional method for manufacturing FRP-made rolls by electroplating. In addition to the simplification of a production process, weight reduction of the roll was achieved as compared with the conventional FRP-made rolls.

### Example 2

### 1. Molding of a CFRP-made pipe stock for roll

A CFRP-made pipe stock for roll was molded in exactly the same manner as in Example 1, and its unnecessary portions at the ends were cut off. Furthermore, the surface was cut with a lathe.

### 2. Formation of a resin layer for electroless plating

There were mixed 100 parts by weight ("parts by weight" is hereinafter referred to merely as "parts") of Sumiepoxy ELA128 (bisphenol A type epoxy resin, a trade name, mfd. by Sumitomo Chemical Co., Ltd.) as an epoxy resin, 85 parts of HN-5500 (methylhexahydrophthalic anhydride, a trade name, mfd. by Hitachi Chemical Company, Ltd.) as a curing agent, and 1 part of Sumicure D (2,4,6-tris(dimethylaminomethyl)phenol, a trade name, mfd. by Sumitomo Chemical Co., Ltd.) as a curing accelerator. Then, 50 parts of Dolomite DW350 (double salt of magnesium carbonate and calcium carbonate, a trade name, mfd. by Shimizu Kogyo Co., Ltd.) was added thereto. The resulting mixture was stirred and mixed to obtain a resin composition for electroless plating.

Subsequently, Filament Mat MF30W (a glass fiber filament, a trade name, mfd. by NITTO BOSEKI Co., Ltd.; weight per unit surface area: 30 g/m²) was impregnated with the resin composition for electroless plating and adhered to the whole surface of the pipe stock for roll. The same procedure as above was repeated with three pieces of Filament Mat, to form a resin layer for electroless plating. The content of Filament Mat was 5% by weight relative to the resin layer for electroless plating consisting of the epoxy resin for electroless plating and Filament Mat. The FRP-made roll having the resin layer for electroless plating containing Filament Mat was placed in a heating oven, and the epoxy resin composition for electroless plating was cured at 120°C for 2 hours. The thickness of the resulting resin layer for electroless plating was about 1.2 mm.

### 3. Finishing of the surface of the resin layer for electroless plating

The surface of the FRP-made roll having the resin for electroless plating was finished with a grinder. The roughness of the finished surface was adjusted to 5 S. In this step, desired roll roundness and straightness were attained. In this stage, the thickness of the resin layer for electroless plating falled within the range of 300 µm to 700 µm at any examined points. Then, a spiral groove with a pitch of about 2 mm, a width of about 1 mm and a depth of about 200 µm was cut with a lathe.

### 4. Electroless plating

Subsequently, after a usual pretreatment, electroless plating was carried out using Top chemialloy B-l (a trade name, an electroless plating solution for electroless nickel-boron alloy plating mfd. by Okuno Seiyaku Kogyo Co., Ltd.) to form a plating layer of about 40 µm thickness.

### 5. Finishing of the roll surface

The roll surface coated with electroless nickel-boron alloy plating was finished with a super-finishing machine to adjust the surface precision to 0.5 S. Thereafter, headers and journals were attached to obtain an FRP-made roll coated with electroless nickel-boron alloy plating of the present invention. The surface hardness Hv of this roll was 800. The spiral groove on the surface was substantially equal to that formed in the resin layer for electroless plating and was usable without any trouble.

### Example 3

The surface of a CFRP-made pipe stock for roll having a resin for electroless plating given by exactly the same procedure as in Example 2 was finished with a grinder. The roughness of the finished surface was 2 S. In this step, desired roll roundness and straightness were attained. After the finishing, the thickness of the epoxy resin composition layer for electroless plating falled within the range of 300 µm to 700 µm at any examining points.

Then, after a usual pretreatment for electroless plating, the surface was uniformly coated with electroless nickel-phosphorus alloy plating to a thickness of about 20 µm. Subsequently, the surface was coated with electroless nickel-phosphorus alloy composite plating containing fluororesin (polytetrafluoroethylene) fine particles to a thickness of about 30 µm. As the electroless composite plating containing fluororesin fine particles, Enrube 750 (a trade name, mfd. by Ebara Udilite) was used. The content of the fluororesin fine particles in the composite plating was about 20% by volume. The particle size of the fluoro-resin fine particles was within the approximate range of 0.1 - 0.5 µm. The hardness of the plating surface was 200 - 300 Hv. The contact angle of a drop of water was 110°.

Subsequently, headers and journals were attached to the CFRP-made pipe stock for roll coated with the composite plating containing the fluororesin fine particles. Thereafter, the roll surface was polished to adjust the surface roughness to 1 S to obtain a roll for rotary press.

This roll was used as conveying roll of a rotary press for newspaper. As a result, the following was found: since said roll was lighter in weight than conventional steel rolls finished by hard chrome plating, the roll could be driven with a low torque, could be increased in revolution rate from zero to a steady rate in a short time, resulting in a short switching time and hence a small loss, and the roll could withstand high-speed operation. It was also found that the printing-ink stains on the surface was reduced than before and could easily be removed. The destaticizing properties of the roll were also good.

### Example 4

A CFRP-made pipe stock for roll was produced in exactly the same manner as in Example 1.

On the other hand, a plain weave fabric having a weight per unit surface area of carbon fiber of 300 g/m² was cut into circular pieces with a radius of 3.5 mm and impregnated with the same epoxy resin composition as used for producing the aforesaid CFRP-made pipe stock for roll. Sixteen of the circular pieces were laminated and then heated and pressed for 2 hours in a hot press under the shaping conditions of 120°C and 15 atmospheres. Thus, two CFRP-made discs of 5 mm thickness were produced.

For making the CFRP-made discs into header portions of roll, a circular hole with a radius of 5 mm was made in the center of each CFRP-made disc. Unnecessary resin oozed out during the molding and attached to the periphery of the discs were cut off, whereby CFRP-made headers with a radius of 3.5 mm were obtained with high precision.

A steel journal with a length of 10 cm and a radius of 5 mm was adhered to each CFRP-made header with an adhesive, as shown in Fig. 1. As the adhesive, there was used a composition obtained by blending triethylene-tetramine with the above-mentioned Sumiepoxy ELA128 in a stoichiometric amount. The adhesive was cured at 80°C for 30 minutes, whereby two CFRP-made headers having the steel journal adhered thereto were produced. Subsequently, the same adhesive as that used for adhering the journal to the header was applied on the periphery of disc of each CFRP-made header having the aforesaid metal journal adhered thereto. The thus treated CFRP-made headers were set in the aforesaid CFRP-made pipe stock for roll. Thereafter, the adhesive was cured at 80°C for 30 minutes to effect bonding.

Using exactly the same epoxy resin composition for electroless plating as in Example 2, the whole roll surface including the header portions at the ends of the CFRP-made roll was coated with the epoxy resin composition for electroless plating in exactly the same manner as in Example 2. Then, the roll was placed in a heating oven and the epoxy resin composition for electroless plating was cured at 120°C for 2 hours.

The FRP-made roll having a resin layer for electroless plating applied thereon and cured was cut with a lathe to increase the roundness and finish the surface. The surface roughness of the resin layer for electroless plating was 2 S. The whole roll surface was coated with electroless copper plating of 10 µm thickness by a conventional method. Then, electroless nickel-boron alloy plating was carried out thereon to a thickness of 50 µm in the same manner as in Example 3, and the surface was finished to 1 S by buffing.

Thus, there was obtained a CFRP-made roll whose pipe stock for roll and header portions were made of CFRP and coated with an electroless plating layer. This CFRP-made roll was very light in weight and was by no means inferior in surface characteristics to conventional steel rolls having electroplating on the surface.

### Example 5

A CFRP-made pipe stock for roll was produced in exactly the same manner as in Example 1. An epoxy resin composition layer for electroless plating was formed on the surface of the CFRP-made roll, its cut areas at the ends, and its inner surfaces at the ends in exactly the same manner as in Example 2. Then, electroless plating was carried out in exactly the same manner as in Example 2 to obtain a CFRP-made pipe stock for roll having a plating layer tucked in to cover the insides of the roll ends owing to the electroless plating. Subsequently, CFRP-made headers produced in exactly the same manner as in Example 4 and steel journals were set in this CFRP-made pipe stock for roll and joined thereto by adhesion. Thereafter, the surface was finished to produce a CFRP-made roll having a plating layer tucked in to cover the insides of the roll ends. This CFRP-made roll was very light in weight and was excellent in resistance to, for example, peeling of plating at the roll ends. It was by no means inferior also in surface characteristics to conventional steel rolls having electroplating on the surface.

### [INDUSTRIAL APPLICABILITY]

The FRP-made roll of the present invention is excellent in economical benefit because of a simplified production process thereof. Since said roll is very light in weight, it is easy to transport, and when used in various producing equipments and treating equipments, the roll can be driven with a low torque, can attain a steady revolution rate in a short time, and can withstand high-speed operation. Therefore, the roll contributes to productivity improvement and laborsaving application. Furthermore, the roll is excellent also in destaticizing properties and durability.

The FRP-made roll of the present invention can be used for production, conveyance and treatment (e.g. printing and dyeing) of various films, papers, sheets, woven clothes, etc. by taking advantage of the above-mentioned characteristics.

The FRP-made roll having an electroless plating layer containing fluororesin fine particles of the present invention is excellent in sliding properties and the oilphobic property and hydrophobic property of the roll surface, and hence is suitable for use in fields related to printing, for example, it is suitable as a conveying roll of a rotary press, in particular, a conveying roll of a rotary press for newspaper.

## Claims

1. A metal-coated roll made of a fiber-reinforced resin, characterized in that in the roll is obtained by forming an electroless plating layer alone on a surface of a pipe stock for roll which pipe stock is made of a fiber-reinforced resin.

2. A metal-coated roll made of a fiber-reinforced resin according to claim 1, wherein the thickness of the electroless plating layer ranges from 5 to 100 µm.

3. A metal-coated roll made of a fiber-reinforced resin, characterized in that the roll is obtained by forming a resin layer for electroless plating as an inner layer and an electroless plating layer as an outer layer on a surface of a pipe stock for roll which pipe stock is made of a fiber-reinforced resin.

4. A metal-coated roll made of a fiber-reinforced resin according to any one of claims 1 and 3, wherein the electroless plating layer is a composite electroless plating layer containing fluororesin fine particles.

5. A metal-coated roll made of a fiber-reinforced resin according to claim 4, wherein the composite electroless plating layer containing fluororesin fine particles is a composite electroless plating layer comprising as its essential constituents either nickel or a nickel-containing alloy and polytetrafluoroethylene fine particles.

6. A metal-coated roll made of a fiber-reinforced resin according to any one of claims 1 and 3, wherein either header portions alone or both header portions and journal portions are made of a fiber-reinforced resin.

7. A metal-coated roll made of a fiber-reinforced resin according to claim 6, wherein the electroless plating covers also the header portions or both the header portions and the journal portions.

8. A metal-coated roll made of a fiber-reinforced resin according to any one of claims 1 and 3, wherein the electroless plating layer formed on a surface of a pipe stock for roll which pipe stock is made of a fiber-reinforced resin is tucked in to cover an inside of the pipe stock for roll which pipe stock is made of a fiber-reinforced resin at ends of the pipe stock for roll which pipe stock is made of a fiber-reinforced resin.

9. A process for producing a metal-coated roll made of a fiber-reinforced resin, characterized by comprising carrying out the following steps in this order:
(1) forming a resin layer for electroless plating on a surface of a pipe stock for roll which pipe stock is made of a fiber-reinforced resin,
(2) finishing a surface of the resin layer for electroless plating, and
(3) carrying out electroless plating.
